# EUROPEAN PATENT APPLICATION

(11) **EP 4 571 999 A1**
(43) Date of publication of application: **18.06.2025**
(21) Application number: 22964809.2
(22) Date of filing: 10.11.2022
(51) Int. Cl.: H01M 50/593, H01M 50/528

(54) **BATTERY CELL AND MANUFACTURING METHOD THEREFOR, AND BATTERY AND ELECTRIC DEVICE**

(71) Applicant: Contemporary Amperex Technology (Hong Kong) Limited, Hong Kong (HK)
(72) Inventor: YANG, Kaihuan, Ningde, Fujian 352100 (CN); ZHOU, Wenlin, Ningde, Fujian 352100 (CN); KE, Haibo, Ningde, Fujian 352100 (CN); LI, Quankun, Ningde, Fujian 352100 (CN); ZHOU, Jian, Ningde, Fujian 352100 (CN)
(74) Representative: Ziebig Hengelhaupt Intellectual Property Attorneys Patentanwaltskanzlei PartGmbB
(86) International application number: PCT/CN2022/131207
(87) International publication number: WO 2024/098340

(57) **Abstract**

Embodiments of this application provides a battery cell and a manufacturing method thereof, a battery, and an electric device, and pertains to the field of battery technologies. The battery cell includes an electrode assembly, an electrode lead-out member, and a first insulating member. The electrode assembly includes a main body and a tab extending from the main body. The electrode lead-out member is connected to the tab to lead out electric energy of the electrode assembly. The electrode lead-out member has a first surface facing the main body. The first insulating member covers at least a portion of the first surface. The battery cell provided in the embodiments of this application features high safety.

## Description

### TECHNICAL FIELD

This application relates to the field of battery technologies, and specifically to a battery cell and a manufacturing method thereof, a battery, and an electric device.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

In the development of battery technology, in addition to battery performance improvement, safety is another non-negligible issue. Therefore, how safety of batteries is improved is an urgent technical problem that needs to be solved in battery technology.

### SUMMARY

This application is intended to provide a battery cell and a manufacturing method thereof, a battery, and an electric device. The battery cell provided in embodiments of this application features high safety.

This application is implemented using the following technical solutions.

According to a first aspect, this application provides a battery cell including an electrode assembly, an electrode lead-out member, and a first insulating member, where the electrode assembly includes a main body and a tab extending from the main body; the electrode lead-out member is connected to the tab to lead out electric energy of the electrode assembly, and the electrode lead-out member has a first surface facing the main body; and the first insulating member covers at least a portion of the first surface.

For the battery cell according to an embodiment of this application, the electrode lead-out member has the first surface facing the main body of the electrode assembly, and at least a portion of the first surface is covered by the first insulating member, which improves the insulation effect between the first surface and the main body of the electrode assembly, and reduces a risk of short circuit caused by lapping between a fallen piece of the active substance layer and the electrode lead-out member, so that the battery cell features high safety.

According to some embodiments of this application, the first insulating member is provided with a first opening opposite the first surface, the electrode lead-out member includes a first connecting zone exposed from the first opening, and the first connecting zone is connected to the tab.

In the foregoing solution, the first opening is provided opposite the first surface and exposes the first connecting zone for connecting the electrode lead-out member to the tab, reducing the risk of the first insulating member affecting the connection between the electrode lead-out member and the tab.

According to some embodiments of this application, the first insulating member is injection molded on the electrode lead-out member.

In the foregoing solution, the first insulating member is injection molded on the electrode lead-out member, which is convenient for processing and manufacturing, and the first insulating member is stably connected to the electrode lead-out member.

According to some embodiments of this application, the electrode assembly is provided in at least two, and the electrode lead-out member includes a body and at least two extension portions, where the extension portions extend from a first edge of the body, the number of extension portions is equal to that of electrode assemblies, and the extension portion is configured to be connected to the tab.

In the foregoing solution, there are at least two extension portions to fit with a plurality of electrode assemblies and facilitate connection between the tab and the electrode lead-out member.

According to some embodiments of this application, the extension portions and the body are arranged in a first direction, and in the first direction, the first insulating member extends beyond or is flush with an end of the extension portion away from the body.

In the foregoing solution, the first insulating member extends beyond or is flush with the end of the extension portion away from the body, so that the first insulating member has a large coverage area on the first surface, further improving the insulation effect of the first insulating member on the first surface.

According to some embodiments of this application, the extension portions and the body are arranged in the first direction, there is a second edge on a side approaching to two adjacent extension portions, the first edge and the second edge are connected through a transition arc, and the first insulating member covers the transition arc.

In the foregoing solution, the second edge and the first edge are connected through the transition arc, which is convenient for processing and manufacturing; and the first insulating member covers the transition arc to enhance the connection strength between the extension portions and the body and reduce the risk of stress damage at the joint between the extension portions and the body.

According to some embodiments of this application, between two adjacent extension portions, a distance by which the first insulating member extends beyond the first edge in the first direction is denoted as L, and a radius of the transition arc is denoted as R, satisfying L ≥ R.

In the foregoing solution, the distance by which the first insulating member extends beyond the first edge is greater than or equal to the radius of the transition arc, which further enhances the connection strength between the extension portions and the body and reduces the risk of stress damage at the joint between the extension portions and the body.

According to some embodiments of this application, the first insulating member includes a bottom wall and a convex portion that are connected to each other, the bottom wall covering at least a portion of the first surface, the electrode lead-out member is provided with a concave portion, and the convex portion and the concave portion fit into each other.

In the foregoing solution, the convex portion and the concave portion fit into each other, so that the first insulating member is not easily disconnected from the electrode lead-out member, and the first insulating member and the electrode lead-out member are firmly assembled.

According to some embodiments of this application, the electrode lead-out member further has a second surface facing away from the main body, and the concave portion is a through hole penetrating through the first surface and the second surface.

In the foregoing solution, the concave portion is a through hole, which is convenient for processing and manufacturing and low in manufacturing cost.

According to some embodiments of this application, the through hole includes a first hole section, and a cross-sectional area of the first hole section gradually increases in a direction from the first surface to the second surface.

In the foregoing solution, the cross-sectional area of the first hole section refers to an area of the first hole section intercepted by a surface parallel to the first surface. The cross-sectional area of the first hole section gradually increases in the direction from the first surface to the second surface. After the convex portion and the through hole fit into each other, the connection strength between the first insulating member and the electrode lead-out member is further enhanced in a thickness direction of the electrode lead-out member, ensuring the stability of the connection between the first insulating member and the electrode lead-out member.

According to some embodiments of this application, the electrode lead-out member further has a second surface facing away from the main body and a side surface connecting the first surface and the second surface; and the first insulating member includes a bottom wall and a side wall, where the bottom wall covers at least a portion of the first surface, the side wall protrudes from an edge of the bottom wall in a direction leaving the electrode assembly, and the side wall covers at least a portion of the side surface.

In the foregoing solution, the side wall covers at least a portion of the side surface, and a contact area between a first connecting member and the electrode lead-out member is increased, providing good stability of the connection between the first insulating member and the electrode lead-out member and improving the insulation effect of the first insulating member on the electrode lead-out member.

According to some embodiments of this application, the first insulating member further includes a top wall, the top wall covers a portion of the second surface, and the top wall is connected to the bottom wall through the side wall.

In the foregoing solution, the top wall covers a portion of the second surface, and the side wall is connected to the top wall and the bottom wall, so that the bottom wall is not easily separated from the first surface.

According to some embodiments of this application, the battery cell further includes an electrode terminal, and the electrode lead-out member is an adapter sheet for electrically connecting the electrode terminal and the tab.

In the foregoing solution, the electrode lead-out member is the adapter sheet, which facilitates the connection between the electrode terminal and the tab and facilitates to lead out the electric energy of the electrode assembly.

According to some embodiments of this application, the first insulating member is provided with a second opening, and the adapter sheet includes a second connecting zone corresponding to the second opening, the second connecting zone being connected to the electrode terminal.

In the foregoing solution, the second opening is provided to facilitate the connection between the second connecting zone and the electrode terminal.

According to some embodiments of this application, the battery cell further includes a second insulating member placed on the first surface and covering the second connecting zone.

In the foregoing solution, the second insulating member is placed on the first surface and covers the second connecting zone, further improving the insulation effect on the first surface and reducing the risk of short circuit inside the battery cell.

According to some embodiments of this application, the second insulating member is connected to the first insulating member.

In the foregoing solution, the second insulating member is connected to the first insulating member, reducing the risk of the second insulating member being separated from the adapter sheet. The second insulating member may be an adhesive tape, or the second insulating member may be an insulating adhesive.

According to some embodiments of this application, the second insulating member fills the second opening.

In the foregoing solution, the second insulating member fills the second opening, and the second insulating member cooperates with the first insulating member, so that a region of the first insulating member exposed from the second connecting zone can be completely covered, reducing the risk of short circuit caused by a fallen piece of the active substance layer entering the second opening.

According to some embodiments of this application, the electrode lead-out member includes a first connecting zone for connecting to the tab, and the second insulating member and the first insulating member completely cover regions of the first surface except the first connecting zone.

In the foregoing solution, the second insulating member and the first insulating member completely cover the regions of the first surface except the first connecting zone, so that the first surface has a larger insulation region, further improving the insulation effect on the first surface.

According to some embodiments of this application, the electrode lead-out member is an electrode terminal.

In the foregoing solution, the electrode lead-out member is an electrode terminal, with a simple structure, and space utilization inside the battery cell is high, so that the battery cell has a high energy density.

According to some embodiments of this application, the tab has a bent structure, and the battery cell further includes a third insulating member, the third insulating member being placed on an inner side of the bent tab.

In the foregoing solution, the third insulating member is placed on the inner side of the bent tab, which enhances the insulation effect on the inner side of the tab and further reduces the risk of short circuit inside the battery cell.

According to some embodiments of this application, the third insulating member extends to the main body.

In the foregoing solution, the third insulating member extends to the main body, which improves the stability of the connection between the third insulating member and the electrode assembly.

According to a second aspect, this application further provides a battery including the battery cells according to any one of the foregoing embodiments.

According to a third aspect, this application further provides an electric device including the battery cell according to any one of the foregoing embodiments, where the battery cell is configured to supply electric energy.

According to a fourth aspect, this application further provides a manufacturing method of battery cell including:
providing an electrode lead-out member, where a first surface of the electrode lead-out member is covered with a first insulating member and exposes a first connecting zone;
connecting a tab of an electrode assembly to the first connecting zone; and
bending the tab so that the first surface faces a main body of the electrode assembly.

According to the manufacturing method of battery cell in an embodiment of this application, the first surface is covered with the first insulating member, and the first connecting zone is exposed on the first surface, which not only facilitates the connection between the tab and the first connecting zone, but also can enhance the insulation effect on the first surface, and reduce the risk of short circuit by lapping between a fallen piece of the active substance layer and the electrode lead-out member, so that the battery cell features high safety.

According to some embodiments of this application, the electrode lead-out member is an adapter sheet, and in the providing an electrode lead-out member, where a first surface of the electrode lead-out member is covered with a first insulating member and exposes a first connecting zone, the method includes: providing an electrode lead-out member, where a first surface of the electrode lead-out member is covered with a first insulating member and exposes a first connecting zone and a second connecting zone; and the manufacturing method of battery cell further includes: connecting an electrode terminal to the second connecting zone; and placing a second insulating member on the first surface to cover the second connecting zone.

In the foregoing solution, the electrode lead-out member is an adapter sheet, the electrical connection between the tab and the electrode terminal is implemented through the electrode lead-out member, and the second insulating member covers a region of the second connecting zone on the first surface, further improving the insulation effect on the first surface and reducing the risk of short circuit inside the battery cell.

According to some embodiments of this application, the electrode lead-out member is an electrode terminal.

In the foregoing solution, the electrode lead-out member is an electrode terminal, and the tab is connected to the electrode terminal, which reduces the number of parts inside the battery cell and improves the space utilization inside the battery cell, so that the battery cell has a high energy density.

According to some embodiments of this application, the manufacturing method of battery cell further includes covering a surface of the tab with a third insulating member, so that after the tab is bent, the third insulating member is placed on an inner side of the bent tab.

In the foregoing solution, with the third insulating member covering the surface of the bent inner side of the tab, the risk of short circuit inside the battery cell is further reduced.

Additional aspects and advantages of this application will be partially given in the following description, and some of which will become apparent in the following description or may be learned from the practice of this application.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic structural diagram of an electrode lead-out member and a first insulating member according to some embodiments of this application;
FIG. 5 is a schematic diagram of assembly of an electrode lead-out member and a first insulating member according to some embodiments of this application;
FIG. 6 is a top view of an electrode lead-out member and a first insulating member after assembly according to some embodiments of this application;
FIG. 7 is a sectional view in direction A-A of FIG. 6;
FIG. 8 is a schematic diagram of assembly of an electrode lead-out member and a first insulating member according to some other embodiments of this application;
FIG. 9 is a schematic diagram of connection between a tab and an adapter sheet according to some embodiments of this application;
FIG. 10 is a schematic diagram of connection between a tab and an electrode terminal according to some embodiments of this application;
FIG. 11 is a schematic flowchart of a manufacturing method of battery cell according to some embodiments of this application; and
FIG. 12 is a schematic flowchart of a manufacturing method of battery cell according to some other embodiments of this application.

The accompanying drawings are not drawn to scale.

Description of reference signs: 100. battery; 10. box; 11. first sub-box; 12. second sub-box; 20. battery cell; 21. shell; 211. housing; 212. cover; 22. electrode assembly; 221. main body; 222. tab; 23. electrode lead-out member; 23a. adapter sheet; 23b. electrode terminal; 231. first surface; 232. first connecting zone; 233. body; 2331. first edge; 234. extension portion; 2341. second edge; 235. transition arc; 236. concave portion; 2361. first hole section; 2362. second hole section; 237. second surface; 238. second connecting zone; 239. side surface; 24. first insulating member; 241. first opening; 242. bottom wall; 243. convex portion; 244. second opening; 245. side wall; 246. top wall; 25. second insulating member; 26. third insulating member; 200. controller; 300. motor; and 1000. vehicle.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions.

In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

In this application, "a plurality of" means more than two (inclusive). Similarly, "a plurality of groups" means more than two (inclusive) groups, and "a plurality of pieces" means more than two (inclusive) pieces.

The battery mentioned in this application is a single physical module that includes one or more battery cells for providing a higher voltage and capacity. For example, the battery mentioned in this application may include a battery module, a battery pack, or the like.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of the current collector uncoated with the positive electrode active substance layer is used as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of the current collector uncoated with the negative electrode active substance layer is used as a negative electrode tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of PP (polypropylene, polypropylene), PE (polyethylene, polyethylene), or the like.

The battery cell further includes a shell and an electrode lead-out member, where the electrode lead-out member is placed on the shell to lead out the electric energy of the electrode assembly, and the electrode lead-out member may be an adapter sheet or an electrode terminal. When the electrode lead-out member is an adapter sheet, the electrode terminal is electrically connected to the tab through the adapter sheet; and when the electrode lead-out member is an electrode terminal, the tab is electrically connected to the electrode terminal.

For the development of battery technologies, various design factors need to be considered, for example, performance parameters such as energy density, discharge capacity, and charge and discharge rate, as well as safety of the battery.

The safety of battery cells mainly includes short circuit between positive and negative electrodes, liquid leakage from the shell, explosion and fire of battery cells caused by excessive internal pressure or temperature, and the like.

The inventors have found that the short circuit between the positive and negative electrodes is mainly caused by lapping between a fallen piece of the active substance layer of the electrode plate and a conductive component (such as the electrode terminal, adapter sheet, tab, and electrode plate). During use of a battery cell, when the battery cell is subjected to vibration, the electrode assembly moves relative to the shell, and the electrode assembly is squeezed and scraped against the shell or other components (such as an insulation structure) within the shell, resulting in a falling-off of the active substance layer of the electrode plate and a short circuit caused by lapping between the fallen piece of the active substance layer and a conductive component (such as the electrode terminal or adapter sheet). For example, when the electrode assembly is placed above the electrode lead-out member, the fallen piece of the active substance layer is likely to fall to the electrode lead-out member and lap with the electrode lead-out member, causing safety risks.

In view of this, to solve the problem of low safety of battery cells caused by short circuit inside battery cells, the inventors have designed a technical solution through in-depth research in which a surface of the electrode lead-out member facing the main body of the electrode assembly is covered with an insulating member. The insulating member improves the insulation effect of the electrode lead-out member, thereby reducing the risk of short circuit caused by lapping between a fallen piece of the active substance layer and the electrode lead-out member.

In such battery cell, no matter whether the electrode assembly is placed above or below the electrode lead-out member, after detachment of the active substance layer from the current collector occurs, even if a fallen piece of the active substance layer moves toward the surface of the electrode lead-out member facing the main body of the electrode assembly, the fallen piece of the active substance layer is isolated from the electrode lead-out member due to the existence of the insulating member, reducing the risk of short circuit caused by lapping between the fallen piece of the active substance layer and the electrode lead-out member, so that the battery cell features high safety.

The battery cell disclosed in the embodiments of this application may be used without limitation in electric devices such as vehicles, ships, or aircrafts. The battery cell, battery, and the like disclosed in this application may be used to constitute a power supply system of that electric device.

An embodiment of this application provides an electric device that uses battery cells as a power source. The electric device may be but is not limited to a mobile phone, a tablet computer, a laptop computer, an electric toy, an electric tool, an electric bicycle, an electric motorcycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an example that the electric device is a vehicle 1000 in an embodiment of this application is used for description in the following embodiments.

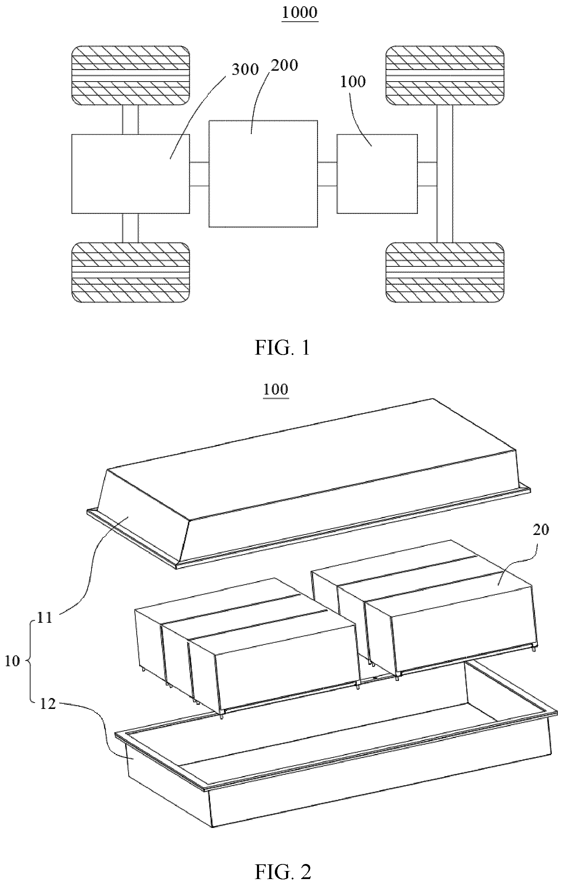

Referring to FIG. 1, FIG. 1 is a schematic structural diagram of a vehicle according to some embodiments of this application. The vehicle 1000 may be a fuel vehicle, a gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000 for use in a circuit system of the vehicle 1000, for example, to satisfy power needs of start, navigation, and running of the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery according to some embodiments of this application. The battery 100 includes a box 10 and battery cells 20, where the battery cells 20 are accommodated in the box 10. The box 10 is configured to provide an accommodating space for the battery cell 20. The box 10 may be a variety of structures. In some embodiments, the box 10 may include a first sub-box 11 and a second sub-box 12. The first sub-box 11 and the second sub-box 12 fit together to jointly define a space for accommodating the battery cells 20. The second sub-box 12 may be a hollow structure with one end open, and the first sub-box 11 may be a plate structure, where the first sub-box 11 covers the open side of the second sub-box 12 so that the first sub-box 11 and the second sub-box 12 jointly define an accommodating space. Alternatively, the first sub-box 11 and the second sub-box 12 may both be hollow structure with one side open, and the open side of the first sub-box 11 covers the open side of the second sub-box 12.

In the battery 100, the battery cells 20 may be present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

The battery cell 20 may be a secondary battery or a primary battery. The battery cell 20 may be a lithium-sulfur battery, a sodium-ion battery, or a magnesium-ion battery, without being limited thereto.

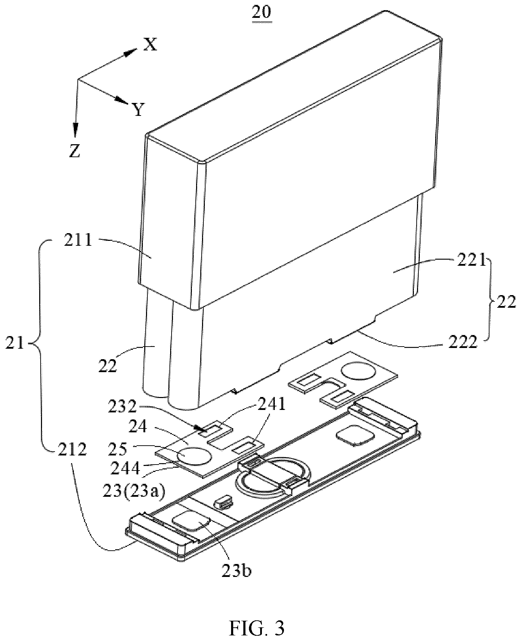

Referring to FIG. 3, FIG. 3 is an exploded view of a battery cell according to some embodiments of this application. As shown in FIG. 3, the battery cell 20 includes a shell 21, an electrode assembly 22, and an electrode terminal 23b. The shell 21 includes a housing 211 and a cover 212. The housing 211 has an opening, and the cover 212 closes the opening to isolate an internal environment of the battery cell 20 from an external environment thereof.

The housing 211 is an assembly configured to form an internal environment of the battery cells 20 together with the cover 212, where the formed internal environment may be configured to accommodate the electrode assembly 22, an electrolyte, and other components. The housing 211 and the cover 212 may be independent components. The housing 211 may be of various shapes and sizes. Specifically, a shape of the housing 211 may be determined according to a specific shape and size of the electrode assembly 22. The housing 211 may be made of various materials such as copper, iron, aluminum, stainless steel, aluminum alloy, and plastic, which are not particularly limited in the embodiments of this application. In the embodiments of this application, the housing 211 being a cuboid shape is used as an example for illustration.

The cover 212 refers to a component that covers an opening of the housing 211 to isolate the internal environment of the battery cell 20 from the external environment thereof. A shape of the cover 212 is not limited and may be adapted to a shape of the housing 211 to match the housing 211. Optionally, the cover 212 may be made of a material with specified hardness and strength (for example, aluminum alloy), so that the cover 212 is less likely to deform when subjected to extrusion and collision, enabling the battery cell 20 to have higher structural strength and improved safety performance. The cover 212 may be provided with functional components such as an electrode terminal 23b. The electrode terminal 23b may be configured to be electrically connected to the electrode assembly 22 for outputting or inputting electric energy of the battery cell 20. The cover 212 may also be made of various materials such as copper, iron, aluminum, stainless steel, aluminum alloy, and plastic, which are not particularly limited in the embodiments of this application. In some embodiments, an insulation structure may also be provided at an inner side of the cover 212. The insulation structure may be configured to isolate an electrically connected component in the housing 211 from the cover 212 to reduce a risk of short circuit. For example, the insulation structure may be made of plastic, rubber, or the like.

The electrode assembly 22 is a component in which electrochemical reactions occur in the battery cell 20. There may be one or more electrode assemblies 22 in the housing 211. The electrode assembly 22 is mainly formed by winding or stacking a positive electrode plate and a negative electrode plate, and a separator is generally provided between the positive electrode plate and the negative electrode plate. The separator is configured to separate the positive electrode plate from the negative electrode plate to prevent internal short circuit between the positive electrode plate and the negative electrode plate. Parts of the positive electrode plate and the negative electrode plate with active substances constitute a main body 221 of a cell assembly, while parts of the positive electrode plate and the negative electrode plate without active substances each constitute a tab 222. A positive tab and a negative tab may both be located at one end of the main body 221 or be located at two ends of the main body 221 respectively. During charge and discharge of the battery, a positive electrode active substance and a negative electrode active substance react with an electrolyte, and the tabs 222 are connected to electrode terminals 23b to form a current loop.

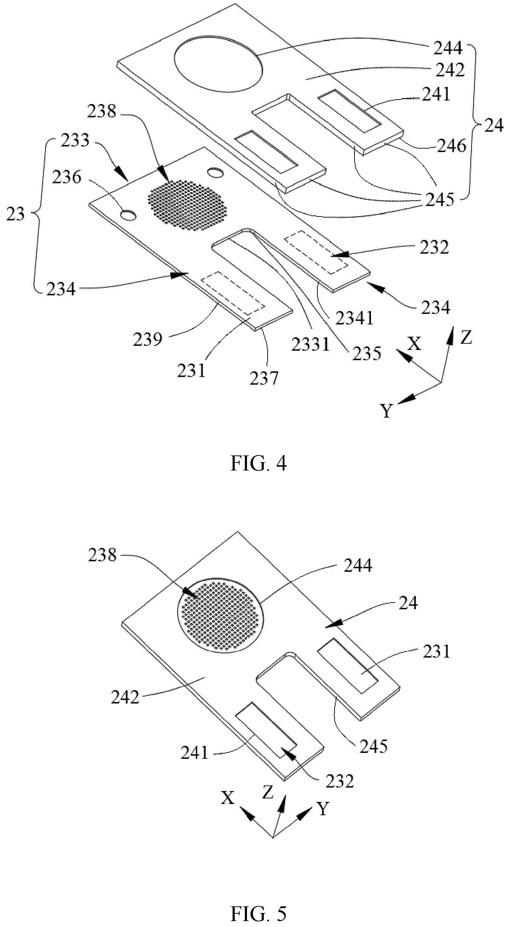

Referring to FIG. 3 and further referring to FIG. 4 and FIG. 5, FIG. 4 is a schematic structural diagram of an electrode lead-out member and a first insulating member according to some embodiments of this application, and FIG. 5 is a schematic diagram of assembly of an electrode lead-out member and a first insulating member according to some embodiments of this application. According to some embodiments of this application, this application provides a battery cell 20. The battery cell 20 includes an electrode assembly 22, an electrode lead-out member 23, and a first insulating member 24. The electrode assembly 22 includes a main body 221 and a tab 222 extending from the main body 221; the electrode lead-out member 23 is connected to the tab 222 to lead out electric energy of the electrode assembly 22, and the electrode lead-out member 23 has a first surface 231 facing the main body 221; and the first insulating member 24 covers at least a portion of the first surface 231.

Parts of the positive electrode plate and the negative electrode plate with active substances constitute a main body 221 of the electrode assembly 22, while parts of the positive electrode plate and the negative electrode plate without active substances each constitute a tab 222.

The electrode assembly 22 includes a positive electrode tab and a negative electrode tab. The positive electrode tab and the negative electrode tab may extend from one side of the main body 221, or the positive electrode tab and the negative electrode tab may extend from two sides of the main body 221. Optionally, the positive electrode tab and the negative electrode tab extend from one side of the main body 221. It should be noted that two electrode lead-out members 23 are provided, and the two electrode lead-out members 23 correspond to the positive electrode tab and the negative electrode tab, respectively.

The electrode lead-out member 23 is a conductive member for electrically connecting to the tab 222 to lead out the electric energy of the electrode assembly 22. The electrode lead-out member 23 may be an adapter sheet or an electrode terminal. When the electrode lead-out member 23 is an adapter sheet, the adapter sheet connects the tab 222 and the electrode terminal. When the electrode lead-out member 23 is an electrode terminal, the electrode terminal is connected to the tab 222.

The electrode lead-out member 23 may be made of copper, aluminum, or the like.

The first surface 231 is a surface of the electrode lead-out member 23 facing the main body 221. In other words, the first surface 231 may be a surface of the electrode lead-out member 23 close to the main body 221.

The first insulating member 24 is an electrically insulating component, and the first insulating member 24 may be made of plastic, for example, PP (polypropylene, polypropylene) or PE (polyethylene, polyethylene).

The first insulating member 24 covering the first surface 231 may mean that the first insulating member 24 is laminated to the first surface 231.

The first insulating member 24 may cover a portion of the first surface 231, or the first insulating member 24 may cover the entire first surface 231 (except a connecting zone between the first surface 231 and the tab 222).

According to the battery cell 20 of an embodiment of this application, the electrode lead-out member 23 has the first surface 231 facing the main body 221 of the electrode assembly 22, and at least a portion of the first surface 231 is covered by the first insulating member 24, which improves the insulation effect between the first surface 231 and the main body 221 of the electrode assembly 22, and reduces a risk of short circuit caused by lapping between a fallen piece of the active substance layer and the electrode lead-out member 23, so that the battery cell 20 features high safety.

Referring to FIG. 4 and FIG. 5, according to some embodiments of this application, the first insulating member 24 is provided with a first opening 241 opposite the first surface 231, the electrode lead-out member 23 includes a first connecting zone 232 exposed from the first opening 241, and the first connecting zone 232 is connected to the tab 222 (referring to FIG. 3).

The first opening 241 is an opening provided on the first insulating member 24 and opposite the first surface 231. The first opening 241 can penetrate through the first insulating member 24 in a direction intersecting with the first surface 231 to expose the first connecting zone 232.

The first connecting zone 232 is a region of the electrode lead-out member 23 for connecting to the tab 222, and a region of the first surface 231 corresponding to the first connecting zone 232 is connected to the tab 222.

The first connecting zone 232 may be connected to the tab 222 by welding, or the first connecting zone 232 may be adhesively connected to the tab 222 using a conductive adhesive. Optionally, the first connecting zone 232 is connected to the tab 222 by welding, so that the tab 222 is firmly connected to the electrode lead-out member 23.

It should be noted that the first connecting zone 232 is only a region in which a welding mark is formed after the tab 222 is connected to the electrode lead-out member 23 by welding. It can be understood that after the tab 222 is connected to the first connecting zone 232, a first insulating member 24 is provided between the tab 222 and the electrode lead-out member 23 in a thickness direction of the electrode lead-out member 23, and the first insulating member 24 is located in a region in which the tab 222 and the electrode lead-out member 23 are not connected by welding. The thickness of the first insulating member 24 is relatively small, having less influence on a total thickness after assembly of the tab 222 with the electrode lead-out member 23.

In the foregoing solution, the first opening 241 is provided opposite the first surface 231 and exposes the first connecting zone 232 for connecting the electrode lead-out member 23 to the tab 222, reducing the risk of the first insulating member 24 affecting the connection between the electrode lead-out member 23 and the tab 222.

According to some embodiments of this application, the first insulating member 24 is injection molded on the electrode lead-out member 23.

When the first insulating member 24 is to be injection molded on the electrode lead-out member 23, the electrode lead-out member 23 is first placed in a corresponding mold, and then molten plastic is poured into the mold, so that the molten plastic is cooled, solidified, and attached to the electrode lead-out member 23.

In the foregoing solution, the first insulating member 24 is injection molded on the electrode lead-out member 23, which is convenient for processing and manufacturing, and the first insulating member 24 is stably connected to the electrode lead-out member 23.

Referring to FIG. 3 to FIG. 5, according to some embodiments of this application, the electrode assembly 22 is provided in at least two, and the electrode lead-out member 23 includes a body 233 and at least two extension portions 234, where the extension portions 234 extend from a first edge 2331 of the body 233, the number of extension portions 234 is equal to that of electrode assemblies 22, and the extension portion 234 is configured to be connected to the tab 222.

There are at least two electrode assemblies 22, and the at least two electrode assemblies 22 can be stacked in a thickness direction of the electrode assemblies 22 to reduce space occupation.

The body 233 and the extension portions 234 are constituent portions of the electrode assembly 22. The body 233 is configured to be connected to other components (such as the electrode terminal and shell), and the extension portion 234 is configured to be connected to the tab 222.

The number of extension portions 234 is equal to that of electrode assemblies 22, and each electrode assembly 22 may correspond to one extension portion 234. In some other embodiments, the number of extension portions 234 may be less than that of electrode assemblies 22, and each extension portion 234 may correspond to one electrode assembly 22 or two electrode assemblies 22.

The extension portion 234 may be connected to the tab 222 by welding, or the extension portion 234 may be adhesively connected to the tab 222 using a conductive adhesive. Optionally, the extension portion 234 is connected to the tab 222 by welding, so that the extension portion 234 is firmly connected to the tab 222.

In the foregoing solution, there are at least two extension portions 234 to fit with a plurality of electrode assemblies 22 and facilitate connection between the tab 222 and the electrode lead-out member 23.

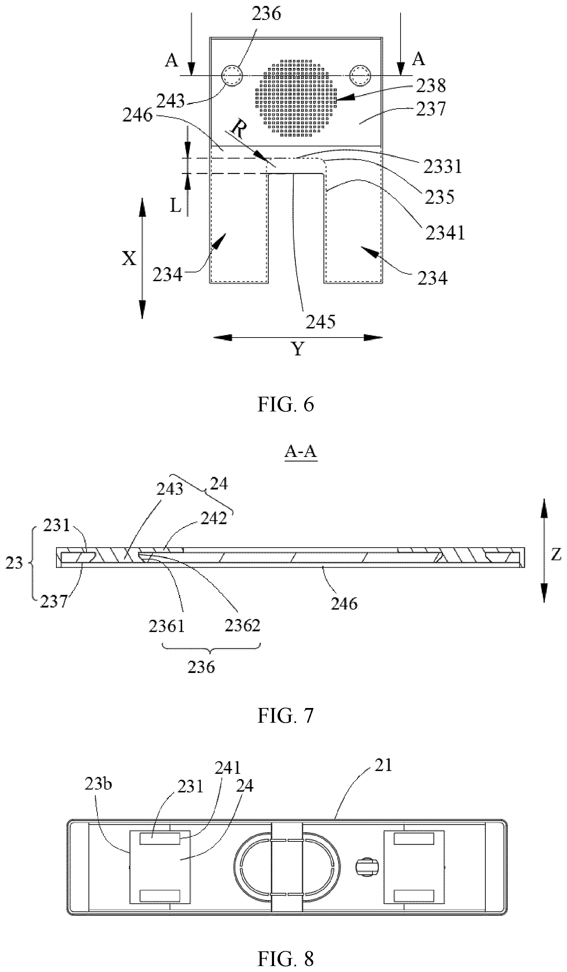

Referring to FIG. 5 and FIG. 6, FIG. 6 is a top view of an electrode lead-out member and a first insulating member after assembly according to some embodiments of this application, and the dashed line in FIG. 6 is the outline of the electrode lead-out member. According to some embodiments of this application, the extension portions 234 and the body 233 are arranged in a first direction X, and in the first direction X, the first insulating member 24 extends beyond or is flush with the end of the extension portion 234 away from the body 233.

In the figures, the direction indicated by letter X may be the first direction.

At least two extension portions 234 are spaced apart in the second direction Y. The second direction Y, the first direction X, and the thickness direction Z of the electrode lead-out member 23 intersect each other.

Optionally, the second direction Y, the first direction X, and the thickness direction Z of the electrode lead-out member 23 are perpendicular to each other.

At the body 233, the first insulating member 24 may extend from one end of the first surface 231 to the other end in the second direction Y. At the extension portions, the first insulating member 24 may extend from one end of the first surface 231 to the other end in the second direction Y, except a region of the first surface 231 for connecting the tab 222.

In the first direction X, the first insulating member 24 extends beyond or is flush with an end of the extension portion 234 away from the body 233, which means that the first insulating member 24 completely covers the extension portion 234 in the first direction X.

In the foregoing solution, the first insulating member 24 extends beyond or is flush with the end of the extension portion 234 away from the body 233, so that the first insulating member 24 has a large coverage area on the first surface 231, further improving the insulation effect of the first insulating member 24 on the first surface 231.

Referring to FIG. 4 to FIG. 6, according to some embodiments of this application, the extension portions 234 and the body 233 are arranged in the first direction X, there is a second edge 2341 on a side approaching to two adjacent extension portions 234, the first edge 2331 and the second edge 2341 are connected through a transition arc 235, and the first insulating member 24 covers the transition arc 235.

The first edge 2331 may be a surface of the body 233 intersecting with the first direction X.

The arrangement of the extension portions 234 and the body 233 in the first direction X reasonably uses the internal space of the battery cell 20, facilitating the connection between the extension portion 234 and the tab 222.

At least two extension portions 234 are spaced apart in the second direction Y. The second direction Y, the first direction X, and the thickness direction Z of the electrode lead-out member 23 intersect each other. Two adjacent extension portions 234 are provided opposite each other in the second direction Y.

The second edge 2341 is an edge of an extension portion 234 close to the adjacent extension portion 234, and the extension line of the second edge 2341 intersects with the first edge 2331. The second edge 2341 may be a surface of the extension portion 234 intersecting the second direction Y.

The transition arc 235 is an arc surface. The transition arc 235 connects the first edge 2331 and the second edge 2341 to achieve an arc transition between the first edge 2331 and the second edge 2341.

The first insulating member 24 wraps the transition arc 235, which means that the first insulating member 24 wraps the transition arc 235 in the thickness direction Z of the electrode lead-out member 23.

In the foregoing solution, the second edge 2341 and the first edge 2331 are connected through the transition arc 235, which is convenient for processing and manufacturing; and the first insulating member 24 covers the transition arc 235 to enhance the connection strength between the extension portions 234 and the body 233 and reduce the risk of stress damage at the joint between the extension portions 234 and the body 233.

Referring to FIG. 6, according to some embodiments of this application, between two adjacent extension portions 234, a distance by which the first insulating member 24 extends beyond the first edge 2331 in the first direction X is denoted as L, and a radius of the transition arc 235 is denoted as R, satisfying L ≥ R.

When at least two extension portions 234 are spaced apart in the second direction Y, a gap is formed between two adjacent extension portions 234, and a portion of the first insulating member 24 can be placed in the gap. The portion of the first insulating member 24 located in the gap may not extend to the end of the extension portion 234 away from the body 233, so as to reduce the waste of materials.

The first insulating member 24 covers the first edge 2331 of the body 233 between two adjacent extension portions 234 and a portion of the second edge 2341 of the extension portions 234.

In the foregoing solution, between two adjacent extension portions 234, a distance by which the first insulating member 24 extends beyond the first edge 2331 in the first direction X is greater than or equal to the radius of the transition arc 235, which further enhances the connection strength between the extension portions 234 and the body 233 and reduces the risk of stress damage at the joint between the extension portions 234 and the body 233.

Referring to FIG. 7, FIG. 7 is a sectional view in direction A-A of FIG. 6. According to some embodiments of this application, the first insulating member 24 includes a bottom wall 242 and a convex portion 243 that are connected to each other, the bottom wall 242 covering at least a portion of the first surface 231; the electrode lead-out member 23 is provided with a concave portion 236; and the convex portion 243 and the concave portion 236 fit into each other.

The bottom wall 242 may cover a portion of the first surface 231, or the bottom wall 242 may cover the entire first surface 231 (except a connecting zone between the first surface 231 and the tab 222).

The convex portion 243 is a portion formed on the bottom wall 242 and protruding toward the first surface 231.

The convex portion 243 and the concave portion 236 fitting into each other may means that the first insulating member 24 and the electrode lead-out member 23 are injection molded, which means that a material constituting the first insulating member 24 is covered on the electrode lead-out member 23 in a molten state and then solidified to form the bottom wall 242 and the convex portion 243, so that the convex portion 243 and the concave portion 236 fit into each other.

In the foregoing solution, the convex portion 243 and the concave portion 236 fit into each other, so that the first insulating member 24 is not easily disconnected from the electrode lead-out member 23, and the first insulating member 24 and the electrode lead-out member 23 are firmly assembled.

Referring to FIG. 6 and FIG. 7, according to some embodiments of this application, the electrode lead-out member 23 further has a second surface 237 facing away from the main body 221, and the concave portion 236 is a through hole penetrating through the first surface 231 and the second surface 237.

The second surface 237 and the first surface 231 are two surfaces of the electrode lead-out member 23 provided opposite each other in the thickness direction Z.

The through hole is a hole penetrating through the first surface 231 and the second surface 237, which means that the through hole communicates the first surface 231 and the second surface 237. The convex portion 243 is formed on the bottom wall 242 and protrudes toward a side of the bottom wall 242 facing away from the electrode assembly 22, so that the convex portion 243 and the through hole can fit into each other.

The concave portion 236 is a through hole, so that the convex portion 243 that fits with the concave portion 236 can extend from the first surface 231 to the second surface 237, and the convex portion 243 does not extend beyond the second surface 237. Optionally, the convex portion 243 is flush with the second surface 237.

There may be a plurality of through holes, where the plurality of through holes are spaced apart and can be distributed in various forms. The through hole may be in a variety of shapes, for example, round, square, or irregular.

In the foregoing solution, the concave portion 236 is a through hole, which is convenient for processing and manufacturing and low in manufacturing cost.

Referring to FIG. 7, according to some embodiments of this application, the through hole includes a first hole section 2361, and a cross-sectional area of the first hole section 2361 gradually increases in a direction from the first surface 231 to the second surface 237.

The cross-sectional area of the first hole section 2361 refers to an area of the first hole section 2361 intercepted by a surface parallel to the first surface 231. The cross-sectional area of the first hole section 2361 gradually increases in the direction from the first surface 231 to the second surface 237. Similarly, the cross-sectional area of the convex portion 243 cooperating with the first hole section 2361 gradually increases in the direction from the first surface 231 to the second surface 237. The convex portion 243 fills the through hole so that the first insulating member 24 is not easily separated from the electrode lead-out member 23 in a direction from the second surface 237 to the first surface 231.

In the foregoing solution, the cross-sectional area of the first hole section 2361 refers to an area of the first hole section 2361 intercepted by a surface parallel to the first surface 231. The cross-sectional area of the first hole section 2361 gradually increases in the direction from the first surface 231 to the second surface 237. After the convex portion 243 and the through hole fit into each other, the connection strength between the first insulating member 24 and the electrode lead-out member 23 is further enhanced in the thickness direction Z of the electrode lead-out member 23, ensuring the stability of the connection between the first insulating member 24 and the electrode lead-out member 23.

Optionally, as shown in FIG. 7, the through hole further includes a second hole section 2362. The second hole section 2362 is connected to an end of the first hole section 2361 close to the first surface 231, which means that the second hole section 2362 and the first hole section 2361 are sequentially distributed in the direction from the first surface 231 to the second surface 237. The cross-sectional area of the second hole section 2362 is constant in the direction from the first surface 231 to the second surface 237. For example, the second hole section 2362 may be an equal-diameter section.

According to some embodiments of this application, the through hole may alternatively be a stepped hole, and the large-diameter section of the stepped hole is closer to the second surface 237 than the small-diameter section.

Referring to FIG. 4 to FIG. 6, according to some embodiments of this application, the electrode lead-out member 23 further has a second surface 237 facing away from the main body 221 and a side surface 239 connecting the first surface 231 and the second surface 237; and the first insulating member 24 includes a bottom wall 242 and a side wall 245, where the bottom wall 242 covers at least a portion of the first surface 231, the side wall 245 protrudes from an edge of the bottom wall 242 in a direction leaving the electrode assembly 22, and the side wall 245 covers at least a portion of the side surface 239.

The second surface 237 and the first surface 231 are provided opposite each other in the thickness direction Z of the electrode lead-out member 23, the side surface 239 connects the second surface 237 and the first surface 231, and the side surface 239 may be an edge of the electrode lead-out member 23. In the figures, the direction indicated by letter X is parallel to a thickness direction of the adapter sheet 23a.

The bottom wall 242 and the side wall 245 are two components of the first insulating member 24. The bottom wall 242 is provided opposite the first surface 231, and the bottom wall 242 covers the first surface 231. The side wall 245 protrudes from an edge of the bottom wall 242 in a direction leaving the electrode assembly 22, and the side wall 245 covers an edge of the electrode lead-out member 23 extending in the thickness direction Z of the electrode lead-out member 23.

In the embodiments in which the electrode lead-out member 23 includes a body 233 and at least two extension portions 234, the side wall 245 may cover the body 233 and the edges of the extension portions 234.

In a protruding direction of the side wall 245, the side wall 245 may cover a portion of the side surface 239, and the side wall 245 may alternatively cover the entire side surface 239.

In an extending direction of the outline of the electrode lead-out member 23, the side wall 245 may be placed around the outline of the electrode lead-out member 23, so that there is a large contact area between the side wall 245 and the electrode lead-out member 23.

In the foregoing solution, the side wall 245 covers at least a portion of the side surface 239, and a contact area between a first connecting member and the electrode lead-out member 23 is increased, providing good stability of the connection between the first insulating member 24 and the electrode lead-out member 23 and improving the insulation effect of the first insulating member 24 on the electrode lead-out member 23.

Referring to FIG. 4 to FIG. 6, according to some embodiments of this application, the first insulating member 24 further includes a top wall 246, the top wall 246 covers a portion of the second surface 237, and the top wall 246 is connected to the bottom wall 242 through the side wall 245.

The top wall 246 is provided opposite the bottom wall 242 in the thickness direction of the adapter sheet 23a, and the top wall 246 is provided opposite the second surface 237.

In the foregoing solution, the top wall 246 covers a portion of the second surface 237, and the side wall 245 is connected to the top wall 246 and the bottom wall 242, so that the bottom wall 242 is not easily separated from the first surface 231.

According to some embodiments of this application, the top wall 246, the side wall 245, and the bottom wall 242 may be integrally molded, so that the first insulating member 24 is firmly connected to the electrode lead-out member 23.

Referring to FIG. 3, according to some embodiments of this application, the battery cell 20 further includes an electrode terminal 23b, and the electrode lead-out member 23 is an adapter sheet 23a for electrically connecting the electrode terminal 23b and the tab 222.

In the foregoing solution, the electrode lead-out member 23 is the adapter sheet 23a, which facilitates the connection between the electrode terminal 23b and the tab 222 and facilitates to lead out the electric energy of the electrode assembly 22.

Referring to FIG. 3 to FIG. 5, according to some embodiments of this application, the first insulating member 24 is provided with a second opening 244, and the adapter sheet 23a includes a second connecting zone 238 corresponding to the second opening 244, the second connecting zone 238 being connected to the electrode terminal 23b.

The second opening 244 is provided opposite the first surface 231, and the second opening 244 exposes the second connecting zone 238.

The second connecting zone 238 may be connected to the electrode terminal 23b by welding, for example, welded to the electrode terminal 23b at the second connecting zone 238 from a side of the adapter sheet 23a facing away from the electrode terminal 23b.

In the foregoing solution, the second opening 244 is provided to facilitate the connection between the second connecting zone 238 and the electrode terminal 23b.

Referring to FIG. 3 and FIG. 4, according to some embodiments of this application, the battery cell 20 further includes a second insulating member 25. The second insulating member 25 is placed on the first surface 231 and covers the second connecting zone 238.

The second insulating member 25 is an electrically insulating component. The second insulating member 25 and the first insulating member 24 may be made of a same or different material. The second insulating member 25 is configured to cover the second connecting zone 238 after the electrode lead-out member 23 is connected to the electrode terminal 23b, preventing the second connecting zone 238 from being exposed.

The second insulating member 25 can be connected to the first surface 231 in various ways. For example, the second insulating member 25 can be adhesively connected to the first surface 231, or the second insulating member 25 can be hot-melt formed on the first surface 231. When the second insulating member 25 is adhesively connected to the first surface 231, the second insulating member 25 may be an adhesive tape, and the adhesive tape is adhesively connected to the first surface 231. Alternatively, the second insulating member 25 may be an insulating adhesive, the insulating adhesive is applied on the second connecting zone 238 and adhesively connected to the first surface 231.

In the foregoing solution, the second insulating member 25 is placed on the first surface 231 and covers the second connecting zone 238, further improving the insulation effect on the first surface 231 and reducing the risk of short circuit inside the battery cell 20.

According to some embodiments of this application, the second insulating member 25 is connected to the first insulating member 24.

The second insulating member 25 may be connected to the first insulating member 24 in various ways. For example, the second insulating member 25 is snap-fitted to the first insulating member 24, or the second insulating member 25 is adhesively connected to the first insulating member 24. When the second insulating member 25 is adhesively connected to the first insulating member 24, the second insulating member 25 may be an adhesive tape or an insulating adhesive, that is simple in structure and easy to operate.

In the foregoing solution, the second insulating member 25 is connected to the first insulating member 24, reducing the risk of the second insulating member 25 being separated from the adapter sheet 23a. The second insulating member 25 may be an adhesive tape, or the second insulating member 25 may be an insulating adhesive.

Referring to FIG. 3, according to some embodiments of this application, the second insulating member 25 fills the second opening 244.

The second insulating member 25 fills the second opening 244. The second insulating member 25 closes the second opening 244, so that the side of the second connecting zone 238 on the first surface 231 is blocked.

The second insulating member 25 may be an insulating adhesive. The insulating adhesive has good plasticity, good laminating effect with the first surface 231, and good sealing effect on the second opening 244. The second insulating member 25 may alternatively be formed by pouring molten plastic into the second opening 244 and solidifying.

In the foregoing solution, the second insulating member 25 fills the second opening 244, and the second insulating member 25 cooperates with the first insulating member 24, so that a region of the first insulating member 24 exposed from the second connecting zone 238 can be completely covered, reducing the risk of short circuit caused by a fallen piece of the active substance layer entering the second opening 244.

Referring to FIG. 3, according to some embodiments of this application, the electrode lead-out member 23 includes a first connecting zone 232 for connecting to the tab 222, and the second insulating member 25 and the first insulating member 24 completely cover regions of the first surface 231 except the first connecting zone 232.

The first connecting zone 232 is a region of the electrode lead-out member 23 for connecting to the tab 222. When the electrode lead-out member 23 is the adapter sheet 23a, the first connecting zone 232 is a region of the adapter sheet 23a for connecting to the tab 222.

In the foregoing solution, the second insulating member 25 and the first insulating member 24 completely cover the regions of the first surface 231 except the first connecting zone 232, so that the first surface 231 has a larger insulation region, further improving the insulation effect on the first surface 231.

Referring to FIG. 8, FIG. 8 is a schematic diagram of assembly of an electrode lead-out member and a first insulating member according to some other embodiments of this application. According to some embodiments of this application, the electrode lead-out member 23 is an electrode terminal 23b.

In the foregoing solution, the electrode lead-out member 23 is an electrode terminal 23b, with a simple structure, and space utilization inside the battery cell 20 is high, so that the battery cell 20 has a high energy density.

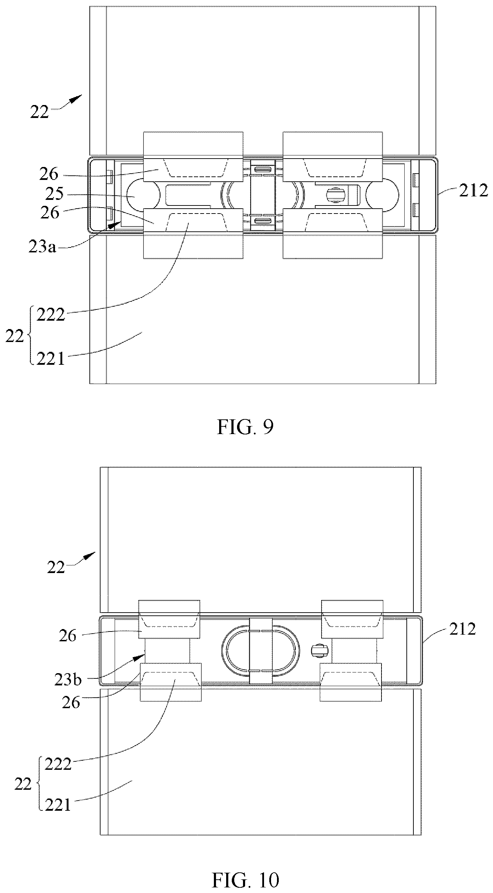

Referring to FIG. 3 and further referring to FIG. 9 and FIG. 10, FIG. 9 is a schematic diagram of connection between a tab and an adapter sheet according to some embodiments of this application; FIG. 10 is a schematic diagram of connection between a tab and an electrode terminal according to some embodiments of this application; and the tab in FIG. 3 is in a bending state while the tab in FIG. 9 and FIG. 10 is in a spreading state. According to some embodiments of this application, the tab 222 has a bent structure, and the battery cell 20 further includes a third insulating member 26, the third insulating member 26 being placed on an inner side of the bent tab 222.

The third insulating member 26 is an electrically insulating member, and the third insulating member 26 may be an adhesive tape.

After the tab 222 is connected to the electrode lead-out member 23, the third insulating member 26 is stuck on a side of the tab 222 facing away from the electrode lead-out member 23, so that the third insulating member 26 is located on the inner side of the tab 222 after the tab 222 is bent. After the tab 222 is bent, the inner surface of the tab 222 faces the main body 221.

In the foregoing solution, the third insulating member 26 is placed on the inner side of the bent tab 222, which enhances the insulation effect on the inner side of the tab 222 and further reduces the risk of short circuit inside the battery cell 20.

Referring to FIG. 9 and FIG. 10, according to some embodiments of this application, the third insulating member 26 extends to the main body 221.

One end of the third insulating member 26 covers the inner side of the tab 222, and the other end of the third insulating member 26 extends toward the main body 221 and covers a portion of the main body 221, so that the third insulating member 26 has a long size and a large contact area with the electrode assembly 22.

In the foregoing solution, the third insulating member 26 extends to the main body 221, which improves the stability of the connection between the third insulating member 26 and the electrode assembly 22.

According to some embodiments of this application, this application further provides a battery including the battery cell 20 according to any one of the foregoing embodiments.

According to some embodiments of this application, this application further provides an electric device including the battery cell 20 according to any one of the foregoing embodiments, where the battery cell 20 is configured to supply electric energy.

The electrical device is any one of the foregoing apparatuses or systems using the battery cell 20.

According to some embodiments of this application, referring to FIG. 3 to FIG. 10, this application provides a battery cell 20. The battery cell 20 is in a cuboid shape. The battery cell 20 includes a shell 21, an electrode assembly 22, an electrode lead-out member 23, a first insulating member 24, a second insulating member 25, a third insulating member 26, and an electrode terminal 23b.

The shell 21 includes a housing 211 and a cover 212. The housing 211 has an opening, and the cover 212 closes the opening of the housing 211.

The electrode assembly 22 is placed within the housing 211. The electrode assembly 22 includes a main body 221 and a tab 222 extending from the main body 221. The electrode terminal 23b is placed on the cover 212, and the electrode lead-out member 23 is electrically connected to the tab 222 and the electrode terminal 23b to lead out the electric energy of the electrode assembly 22. The electrode lead-out member 23 is an adapter sheet 23a.

The electrode lead-out member 23 includes a body 233 and two extension portions 234. The two extension portions 234 and the body 233 are arranged in the first direction X. The two extension portions 234 are spaced apart in the second direction Y. The second direction Y, the first direction X, and the thickness direction Z of the electrode lead-out member 23 are perpendicular to each other. Two electrode assemblies 22 are provided, and the tab 222 of each electrode assembly 22 is connected to one extension portion 234. The electrode lead-out member 23 has a first surface 231 facing the main body 221, a second surface 237 facing away from the main body 221, and a side surface 239 connecting the first surface 231 and the second surface 237. The electrode lead-out member 23 includes a first connecting zone 232 for connecting to the tab 222 and a second connecting zone 238 for connecting to the electrode terminal 23b. The electrode lead-out member 23 includes a concave portion 236. The concave portion 236 is a through hole penetrating through the first surface 231 and the second surface 237, and the through hole has a first hole section 2361. The cross-sectional area of the first hole section 2361 gradually increases from the first surface 231 to the second surface 237.

The first insulating member 24 includes a bottom wall 242, a convex portion 243, a side wall 245, and a top wall 246. The bottom wall 242 is provided opposite the first surface 231. The bottom wall 242 is provided with a first opening 241 and a second opening 244. The first opening 241 exposes the first connecting zone 232 for connecting the tab 222 to the first connecting zone 232. The second opening 244 corresponds to the second connecting zone 238. The convex portion 243 protrudes from the bottom wall 242 in a direction leaving the electrode assembly 22, and the convex portion 243 and the concave portion 236 fit into each other. The side wall 245 is connected to an edge of the bottom wall 242 and extends in a direction leaving the electrode assembly 22. The side wall 245 wraps the side surface 239, and a portion of the side wall 245 is located between the two extension portions 234. The side wall 245 wraps the joint between the extension portions 234 and the body 233. The top wall 246 is provided opposite the second surface 237. The top wall 246 covers the extension portions 234 and a portion of the body 233. The top wall 246 exposes the second connecting zone 238. The first insulating member 24 is injection molded on the electrode lead-out member 23.

The second insulating member 25 fills the second opening 244 to cover the second connecting zone 238, and the second insulating member 25 cooperates with the first insulating member 24 to cover regions of the first surface 231 except the first connecting zone 232.

The third insulating member 26 is placed on an inner side of the bent tab 222. The third insulating member 26 extends to the main body 221.

According to the battery cell 20 of an embodiment of this application, the first insulating member 24 and the second insulating member 25 cover the regions of the first surface 231 except the first connecting zone 232, so that a side of the electrode lead-out member 23 facing the main body 221 has a good insulating effect. Especially, when the electrode assembly 22 is placed above the electrode lead-out member 23, a fallen piece of the active substance layer is not likely to cause a short circuit by lapping with the electrode lead-out member 23, so that the battery cell 20 features high safety.

The battery cell 20, the battery, and the electrical device have been described above, and the manufacturing method of battery cell according to an embodiment of this application will be described below. For parts not described in detail, reference may be made to the foregoing embodiments.

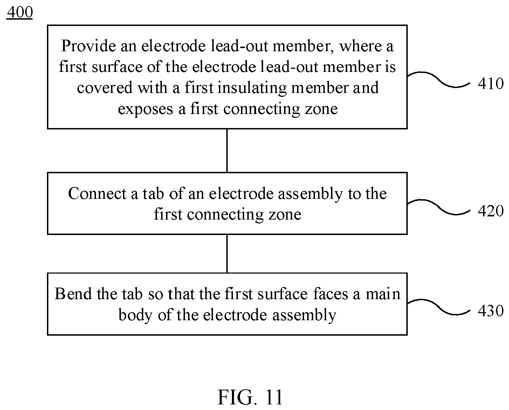

FIG. 11 is a schematic flowchart of a manufacturing method of battery cell according to some embodiments of this application. As shown in FIG. 11, a manufacturing method 400 of battery cell may include:
410. Provide an electrode lead-out member 23, where a first surface 231 of the electrode lead-out member 23 is covered with a first insulating member 24 and exposes a first connecting zone 232;
420. Connect a tab 222 of an electrode assembly 22 to the first connecting zone 232; and
430. Bend the tab 222 so that the first surface 231 faces a main body 221 of the electrode assembly 22.

In step "410. Provide an electrode lead-out member 23, where a first surface 231 of the electrode lead-out member 23 is covered with a first insulating member 24 and exposes a first connecting zone 232", the first insulating member 24 also covers a side surface 239 and a portion of a second surface 237 of the electrode lead-out member 23, and the first insulating member 24 is injection molded on the electrode lead-out member 23.

According to the manufacturing method 400 of battery cell in an embodiment of this application, the first surface 231 is covered with the first insulating member 24, and the first connecting zone 232 is exposed on the first surface 231, which not only facilitates the connection between the tab 222 and the first connecting zone 232, but also can enhance the insulation effect on the first surface 231, and reduce the risk of short circuit by lapping between a fallen piece of the active substance layer and the electrode lead-out member 23, so that the battery cell 20 features high safety.

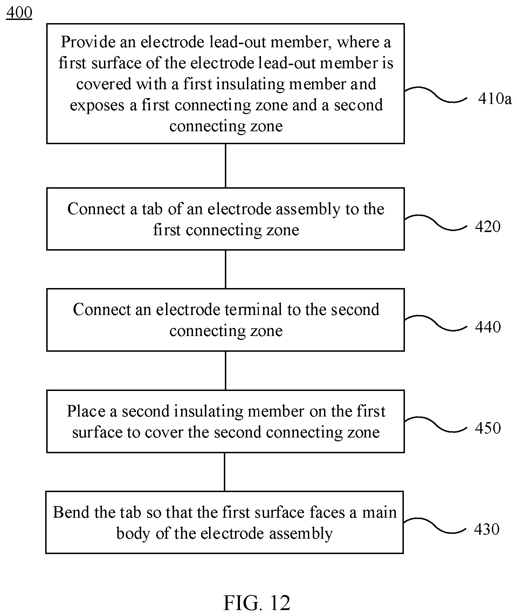

FIG. 12 is a schematic flowchart of a manufacturing method of battery cell according to some other embodiments of this application. According to some embodiments of this application, the electrode lead-out member 23 is an adapter sheet 23a, and in the providing an electrode lead-out member 23, where a first surface 231 of the electrode lead-out member 23 is covered with a first insulating member 24 and exposes a first connecting zone 232, the method includes: 410a. Provide an electrode lead-out member 23, where a first surface 231 of the electrode lead-out member 23 is covered with a first insulating member 24 and exposes a first connecting zone 232 and a second connecting zone 238. As shown in FIG. 12, the manufacturing method 400 of battery cell further includes:
440. Connect an electrode terminal 23b to the second connecting zone 238; and
450. Place a second insulating member 25 on the first surface 231 to cover the second connecting zone 238.

The step "440. Connect an electrode terminal 23b to the second connecting zone 238" and the step "450. Place a second insulating member 25 on the first surface 231 to cover the second connecting zone 238" can be arranged before the step "430. Bend the tab 222 so that the first surface 231 faces a main body 221 of the electrode assembly 22".

The first insulating member 24 exposes the first connecting zone 232 and the second connecting zone 238, so that the electrode lead-out member 23 can be connected to the tab 222 and the electrode terminal 23b. The tab 222 and the electrode terminal 23b are located on two sides of the electrode lead-out member 23 in the thickness direction Z.

The second insulating member 25 covers the second connecting zone 238 after the electrode lead-out member 23 is connected to the electrode terminal 23b, to reduce the risk of short circuit caused by lapping between a fallen piece of the active substance layer and the second connecting zone 238.

In the foregoing solution, the electrode lead-out member 23 is an adapter sheet 23a, the electrical connection between the tab 222 and the electrode terminal 23b is implemented through the electrode lead-out member 23, and the second insulating member 25 covers a region of the second connecting zone 238 on the first surface 231, further improving the insulating effect on the first surface 231 and reducing the risk of short circuit inside the battery cell 20.

According to some embodiments of this application, the electrode lead-out member 23 is an electrode terminal 23b.

In the foregoing solution, the electrode lead-out member 23 is an electrode terminal 23b, and the tab 222 is connected to the electrode terminal 23b, which reduces the number of parts inside the battery cell 20 and improves the space utilization inside the battery cell 20, so that the battery cell 20 has a high energy density.

According to some embodiments of this application, the manufacturing method 400 of battery cell further includes:
covering a surface of the tab 222 with a third insulating member 26, so that after the tab 222 is bent, the third insulating member 26 is placed on an inner side of the bent tab 222.

The step of "covering a surface of the tab 222 with a third insulating member 26" is arranged before the step "430. Bend the tab 222 so that the first surface 231 faces a main body 221 of the electrode assembly 22". After the tab 222 is bent, the electrode lead-out member 23 and the main body 221 can be arranged in the thickness direction Z of the electrode lead-out member 23, facilitating placing of the electrode lead-out member 23 into the housing 211. After the tab 222 is bent, the inner surface of the tab 222 faces the main body 221, and the third insulating member 26 covers the inner surface of the tab 222.

In the foregoing solution, with the third insulating member 26 covering the surface of the bent inner side of the tab 222, the risk of short circuit inside the battery cell 20 is further reduced.

According to some embodiments of this application, the manufacturing method of battery cell further includes: before the step "440. Connect an electrode terminal 23b to the second connecting zone 238", placing the electrode terminal 23b on the cover 212; and after the step "460. Cover the surface of the bent inner side of the tab 222 with the third insulating member 26", placing the electrode assembly 22 in the housing 211 and using the cover 212 to close the opening of the housing 211.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, comprising:
an electrode assembly comprising a main body and a tab extending from the main body;
an electrode lead-out member connected to the tab to lead out electric energy of the electrode assembly, the electrode lead-out member having a first surface facing the main body; and
a first insulating member covering at least a portion of the first surface.

2. The battery cell according to claim 1, wherein the first insulating member is provided with a first opening opposite the first surface, the electrode lead-out member comprises a first connecting zone exposed from the first opening, and the first connecting zone is connected to the tab.

3. The battery cell according to claim 1 or 2, wherein the first insulating member is injection molded on the electrode lead-out member.

4. The battery cell according to any one of claims 1 to 3, wherein the electrode assembly is provided in at least two, and the electrode lead-out member comprises a body and at least two extension portions, wherein the extension portions extend from a first edge of the body, the number of extension portions is equal to that of electrode assemblies, and the extension portion is configured to be connected to the tab.

5. The battery cell according to claim 4, wherein the extension portions and the body are arranged in a first direction, and in the first direction, the first insulating member extends beyond or is flush with an end of the extension portion away from the body.

6. The battery cell according to claim 4 or 5, wherein the extension portions and the body are arranged in a first direction, there is a second edge on a side approaching to two adjacent extension portions, the first edge and the second edge are connected through a transition arc, and the first insulating member covers the transition arc.

7. The battery cell according to claim 6, wherein between two adjacent extension portions, a distance by which the first insulating member extends beyond the first edge in the first direction is denoted as L, and a radius of the transition arc is denoted as R, satisfying L ≥ R.

8. The battery cell according to any one of claims 1 to 3, wherein the first insulating member comprises a bottom wall and a convex portion that are connected to each other, the bottom wall covering at least a portion of the first surface, the electrode lead-out member is provided with a concave portion, and the convex portion and the concave portion fit into each other.

9. The battery cell according to claim 8, wherein the electrode lead-out member further has a second surface facing away from the main body, and the concave portion is a through hole penetrating through the first surface and the second surface.

10. The battery cell according to claim 9, wherein the through hole comprises a first hole section, and a cross-sectional area of the first hole section gradually increases in a direction from the first surface to the second surface.

11. The battery cell according to any one of claims 1 to 10, wherein the electrode lead-out member further has a second surface facing away from the main body and a side surface connecting the first surface and the second surface; and the first insulating member comprises a bottom wall and a side wall, wherein the bottom wall covers at least a portion of the first surface; the side wall protrudes from an edge of the bottom wall in a direction leaving the electrode assembly; and the side wall covers at least a portion of the side surface.

12. The battery cell according to claim 11, wherein the first insulating member further comprises a top wall, the top wall covers a portion of the second surface, and the top wall is connected to the bottom wall through the side wall.

13. The battery cell according to any one of claims 1 to 12, wherein the battery cell further comprises an electrode terminal, and the electrode lead-out member is an adapter sheet for electrically connecting the electrode terminal and the tab.

14. The battery cell according to claim 13, wherein the first insulating member is provided with a second opening, and the adapter sheet comprises a second connecting zone corresponding to the second opening, the second connecting zone being connected to the electrode terminal.

15. The battery cell according to claim 14, wherein the battery cell further comprises:
a second insulating member placed on the first surface and covering the second connecting zone.

16. The battery cell according to claim 15, wherein the second insulating member is connected to the first insulating member.

17. The battery cell according to claim 15 or 16, wherein the second insulating member fills the second opening.

18. The battery cell according to claim 15, wherein the electrode lead-out member comprises a first connecting zone for connecting to the tab, and the second insulating member and the first insulating member completely cover regions of the first surface except the first connecting zone.

19. The battery cell according to any one of claims 1 to 10, wherein the electrode lead-out member is an electrode terminal.

20. The battery cell according to any one of claims 1 to 19, wherein the tab has a bent structure, and the battery cell further comprises a third insulating member, the third insulating member being placed on an inner side of the bent tab.

21. The battery cell according to claim 20, wherein the third insulating member extends to the main body.

22. A battery, comprising the battery cell according to any one of claims 1 to 21.

23. An electric device, comprising the battery cell according to any one of claims 1 to 21, wherein the battery cell is configured to supply electric energy.

24. A manufacturing method of battery cell, comprising:
providing an electrode lead-out member, wherein a first surface of the electrode lead-out member is covered with a first insulating member and exposes a first connecting zone;
connecting a tab of an electrode assembly to the first connecting zone; and
bending the tab so that the first surface faces a main body of the electrode assembly.

25. The manufacturing method of battery cell according to claim 24, wherein the electrode lead-out member is an adapter sheet;
in the providing an electrode lead-out member, wherein a first surface of the electrode lead-out member is covered with a first insulating member and exposes a first connecting zone, the method comprises:
providing an electrode lead-out member, wherein a first surface of the electrode lead-out member is covered with a first insulating member and exposes a first connecting zone and a second connecting zone; and
the manufacturing method of battery cell further comprises:
connecting an electrode terminal to the second connecting zone; and
placing a second insulating member on the first surface to cover the second connecting zone.

26. The manufacturing method of battery cell according to claim 24, wherein the electrode lead-out member is an electrode terminal.

27. The manufacturing method of battery cell according to claim 24, wherein the manufacturing method of battery cell further comprises:
covering a surface of the tab with a third insulating member, so that after the tab is bent, the third insulating member is placed on an inner side of the bent tab.
